# EUROPEAN PATENT APPLICATION

(11) **EP 3 422 190 A1**
(43) Date of publication of application: **02.01.2019**
(21) Application number: 17178480.4
(22) Date of filing: 28.06.2017
(51) Int. Cl.: G06F 11/36

(54) **A METHOD OF TESTING AN ELECTRONIC DEVICE**

(71) Applicant: Vestel Elektronik Sanayi ve Ticaret A.S., 45030 Manisa (TR)
(72) Inventor: METIN, Duygu, 45030 Manisa (TR); GEBIZLI, Ceren Sahin, 45030 Manisa (TR)
(74) Representative: Flint, Adam

(57) **Abstract**

In a method of testing an electronic device, a plurality of pre-defined test suites are executed (304) on the electronic device to test one or more aspects of the functionality of the electronic device. Exploratory testing (320) is subsequently carried out on the electronic device. The exploratory testing is based on the results of the execution of the pre-defined test suites.

## Description

### Technical Field

The present disclosure relates to a method of testing an electronic device.

### Background

During the production of electronic devices such as televisions, DVD players, set-top boxes, cellular phones (including so-called "smart phones") and entertainment systems generally, testing is a common step. In particular, testing can involve the use of 'test suites', which are a set of standard 'test cases' executed on the device to detect bugs and faults. Preferably, the more freeform 'exploratory testing' is also carried out on electronic devices during the manufacturing process.

### Summary

According to an aspect disclosed herein, there is provided a method of testing an electronic device, the method comprising:
executing a plurality of pre-defined test suites on the electronic device to test one or more aspects of the functionality of the electronic device; and
subsequently carrying out exploratory testing on the electronic device, the exploratory testing being based on the results of the execution of the pre-defined test suites.

In an example, the exploratory testing that is carried out on the electronic device is carried out based on at least one test suite that produced the most unresolved errors during the execution of the plurality of pre-defined test suites on the electronic device

In an example, the exploratory testing that is carried out on the electronic device is carried out based one or more of: on a number of faults detected when the test suites are executed on the electronic device; values assigned to the severity of the faults detected; and values assigned to the resolution of the faults.

In an example, the exploratory testing that is carried out on the electronic device is carried out based on a test suite score calculated for each of the pre-defined test suites as a result of execution of the pre-defined test suites on the electronic device.

In an example, the test suite scores are calculated based on the number of faults detected when the test suite is executed on the electronic device, the values assigned to the severity of the faults detected, and the values assigned to the resolution of the faults.

### Brief Description of the Drawings

To assist understanding of the present disclosure and to show how embodiments may be put into effect, reference is made by way of example to the accompanying drawings in which:
Figure 1 shows schematically an example table of results; and
Figure 2 shows schematically an example table of results.
Figure 3 shows schematically a flowchart illustrating example actions performed when executing the present invention

### Detailed Description

When manufacturing electronic devices such as televisions, DVD players, set-top boxes, cellular phones (including so-called 'smart phones') and entertainment systems generally, it is common to subject the device to testing in order to detect bugs and faults.

Therefore, it is advantageous to have a method of testing an electronic device, comprising executing a plurality of pre-defined test suites on the electronic device to test one or more aspects of its functionality. Subsequently, exploratory testing can be carried out on the electronic device, the exploratory testing being based on the results of the execution of the pre-defined test suites.

In the field of software and device testing, the term 'bug' or 'fault' can cover a variety of unexpected or undesired outcomes.

For example, a fault could be detected when a software, system, device or entity of the like does not behave as expected within a given set of conditions. Alternatively, a fault could result in software being unable to be completely implemented on, or not be compatible with, the system or device being tested. A fault could also result from a coding level error or discrepancy, leaving it unable execute successfully on a system. A fault may also be present despite apparent successful implementation of a software, and intermediate data or an application of different conditions may be necessary to identify it. The presence of a fault in a system, software, device, etc. may result in an inability to operate it or run the software. It may also result in incorrect operation.

'Bug' is a common term in the field of testing used to describe an error, failure or fault in a component of software implemented on an electronic device. For example, a bug could be present in the memory component of the device, or a piece of code executed on it during testing. The term 'bug' and 'fault' are able to be used interchangeably in the present disclosure.

Testing methods such as the above mentioned test suites are traditionally designed to follow a fixed set of instructions to investigate a particular feature or achieve a particular result. In these circumstances, a more flexible testing approach is necessary to investigate and fix these errors in the system or device.

Another method of testing known in the art is exploratory testing. Exploratory testing is a way of extensively testing software and firmware to identify and tackle subtle faults. In particular it is effective when detecting new bugs and unpredicted outcomes. Exploratory testing can be carried out by way of automated methods, by human testers, or by a combination of the two. Exploratory testing does not necessarily follow a fixed series of steps or set of instructions, but can instead be dynamically adapted to focus on specific bugs, or recurring faults, for example. Exploratory testing is sometimes also known as 'freeform testing' due to the wide or even free choice a tester has when carrying out the testing. The test may, for example, explore the system or device by mimicking the behaviour of a user, to uncover unexpected reactions to commands.

As a specific example of exploratory testing of a television device, a tester may wish to assess the audio output of a television device when faced with multiple media sources. The tester mimics a scenario where a user is watching a digital broadcast, and without stopping it connects an external music source to the television speakers. For example, this could be via Bluetooth or Wi-Fi connection, or a physical cable connection. Alternatively, a user may play music from a cloud storage, accessed via the television unit.

In one step, the tester may take note of how the television audio output component reacts to a broadcast signal being disturbed by a new audio device connecting to the television unit via Bluetooth connection. In a second stage, the tester could see if the reaction is the same when they physically connect a media source to the television unit. Alternatively, the tester may compare the first reaction to that of a multimedia player connected to the television unit via a Bluetooth connection, whilst the multimedia player is playing a video. In another step, the video being played by the multimedia player may be locally stored on the multimedia device. Alternatively, the video is streamed from an internet browser.

Exploratory testing is extremely valuable for software testing, but is time and labour intensive. Therefore, it is not always efficient to carry out exploratory testing on all test suites to which the software has been subjected. To maximise the effect of exploratory testing whilst keeping the testing process time efficient and of a viable duration for the manufacturing process, exploratory testing can be carried out on the test suites exhibiting the most number of bugs and faults. This would allow a large number of bugs and faults to be addressed whilst carrying out a minimal number of exploratory tests.

In order to detect and resolve bugs and faults, testers and developers typically use 'test suites' as a part of the manufacturing process of an electronic device or system. Test suites are a collection of test cases. Test cases are standard, scripted tests that are executed on electronic devices and systems towards the end stages of their manufacture. They can be used to determine the response of the system, thereby flagging faults and bugs.

In more detail, especially in the context of the present disclosure, a test case is a set of conditions, variables or instructions to be applied to an electronic device. Test cases are often designed around testing a specific feature/element of a system. For this reason, they are sometimes considered to be 'partial' tests of a system. For example, in the case of a television device, a test case may be designed to test and assess the element which receives digital television signals from an external source. Alternatively, for example, this may be an analogue signal.

A test case can include at least one of an identifier, prerequisites of the system and/or the test case, a step-by-step test procedure, and an identification of the system feature/element that it is designed to test. Optionally, a test case is associated with at least one expected outcome, against which the actual outcome of the test once executed on an electronic device is compared. Alternatively or additionally, the test case may also contain a pass/fail condition. In an example embodiment, this could help to specify if any bugs or faults were found that were unable to be fixed (a fail), or if the outcome corresponded to the expected outcome, and if any bugs or faults were able to be fixed during the testing period (a pass).

A number of test cases that are designed to test a particular section/feature of a system can be grouped together and implemented on an electronic device as a 'test suite'. Test suites are a commonly used scripted way to assess a system or device for faults, by using a set of standard test cases.

The test suite itself can be associated with at least one of a set of instructions, an identifier, prerequisites and an identification of the feature it is intended to test. Multiple test suites aimed at testing different elements can be executed on a system or device to build a picture of the efficiency of the entire system, and to identify the areas that require further development.

As one specific example, a test suite may aim to test browser log-in scripts. The component test cases may include at least one of log-in test script of a first Web browser, log-in test script of a second browser, and login test-script of a third browser. In another example embodiment, a test suite aims to simulate an internet purchase transaction, comprising a test case to log-in, a test case to add a product to a cart, a test case to checkout and a test case to log-out.

Taking the example of a digital television, in an example embodiment of a test suite, the pre-requisite may include specifications of the television, such as the display screen resolution and type (e.g. LCD or OLED), input components, digital accessories and their related electronic components, whether the television is Blu-Ray compatible, etc. These pre-requisites may be important for determining whether the test suite is compatible with or appropriate for the device.

In another example embodiment, a test suite may be designed to test a modification made to an older television model for a newer model. If a developer wishes to test a new feature, a test suite may use test cases relating only to the new feature. For example, the new feature may be an increase in resolution of the display screen. The test suite may aim to test that the screen is still capable of displaying broadcast signals. The test cases may thus concern at least one of the connectivity between the signal-receiving element and the display element, checking the display element is compatible with the new screen requirements, and confirming the actual display of a higher resolution image.

Further examples of test suites to be implemented on an electronic device could aim to test the mode of operation, source switching (e.g. switching between inputs from a DVD player or personal video recorder (PVR), satellite and terrestrial receivers, set-top boxes, etc.), timers, PVRs, HTTP updates and media browsers.

The severity of the bugs and faults detected can be taken into consideration when assessing which test suites would most benefit from exploratory testing. The number of bugs, and/or their resolution by the test suite may also be taken into consideration when selecting the test suites to be exposed to exploratory testing. In an example embodiment of the invention, a score can be assigned to a test suite once it has been executed on the electronic device. The score can be dependent on the severity of the bugs and faults found, the resolution of these bugs and faults, and/or their severity.

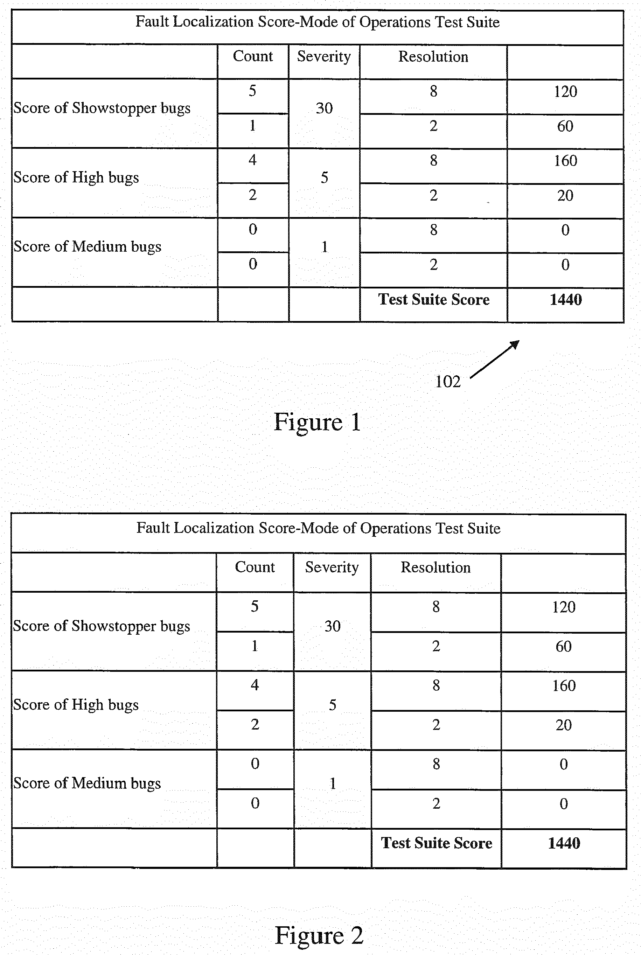

Figure 1 demonstrates an example scoring method used to calculate the test score of a test suite executed on a system/electronic device. The overall fault score 102 is calculated by multiplying the count, severity and resolution of one of a plurality of bugs, and then summing all the bug scores to give a total test suite score.

Figure 2 demonstrates an example test suite score table, wherein the test suite scores are calculated for multiple test suites.

Exploratory testing can also be used to generate test cases to be implemented as part of a test suite. Such test cases can be designed with the faults and bugs likely to appear from past executions in mind.

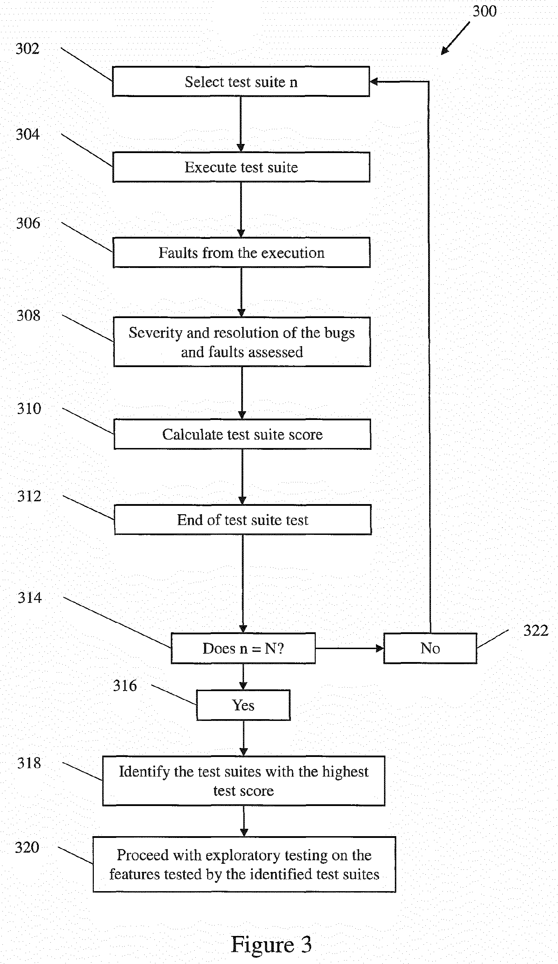

Figure 3 represents an example embodiment of the steps that could be taken in a testing process 300 to select the feature of the system or electronic device to undergo exploratory testing. First, a test suite is selected 302 and executed 304 on the system or device. Faults from the test are identified 308 and a test suite score calculated based upon their severity.

Bugs and faults are identified 308 and a test suite score is calculated 310. The faults may be known to the tester or system/device. Alternatively or additionally, the identified faults may be new. In one example, the test suite score can be based upon the severity of the fault.

The severity of the fault can range from small enough to remain in the system or device relatively unnoticed to so severe that the system or device will not function or operate at all. Faults can be assigned a priority level indicating its severity. Faults that are so significant to prevent the system or device from functioning properly or even shut it down may be assigned a high score. Critical faults may be regarded as 'showstoppers'. Showstoppers may cause the device system to reset or even to crash, and would inevitably result in a customer returning the device to the manufacturer. Faults of low severity may in one example be assigned a low score. There may also be faults in between these two extremes, such as medium or high severity, which are given scores accordingly. A medium severity fault may not hinder the function of the device so much so that a user is not able to use the device (even though the fault may be noticed by the user). An example of a medium severity fault may be missing characters in a string of text or the like or some other fault in a user interface displayed on a user device. A high severity fault may disturb use of the device, but can be rectified by the user. For example, a high severity fault may be duplicated installation of television channels. One version of the channel may be faulty (for example it may be missing audio). The user may be able to rectify the problem by deleting the faulty duplicate, thereby resolving the problem.

Figure 1 demonstrates an example embodiment of a results table from execution of a test suite on a system or device. In this example, 'Medium' bugs are the least threatening bugs, and are thus associated with a severity value of 1. 'High' bugs pose a more serious problem to the system or device, and are associated with a severity level of 5. 'Showstopper' bugs pose the greatest threat to the system/device, and are assigned a severity level of 30. Such showstopper bugs may be capable of disabling the system/device, thus their high severity level.

In some embodiments, faults are assigned a pre-determined severity value. Alternatively or additionally, the new faults are assigned a severity value based on the effect they have on the system or device. In some embodiments each different bug can be assigned a different severity level based on individual effect on a system or device. Alternatively, the faults can be assigned to a severity level which covers a range of effects on a system. For example, faults which causes a disturbance in the output of a signal for under 30 seconds may be considered a medium bug. A fault which does not allow the signal to be retrieved following a disturbance may be considered a showstopper bug.

Alternatively or additionally, the test suite score can be based on the frequency of the fault (how often it appears during the testing process). The frequency value of the faults can be counted during the implementation of the test suite. Alternatively or additionally, the system/device can be monitored for a pre-determined about of time following the end of the testing process, and the faults counted. The faults can be counted immediately after the testing process for a pre-determined amount of time. Alternatively, the system/device can be monitored for faults after a pre-determined period of time from when the testing process finished.

Alternatively or additionally, the test suite score can also be based on the resolution of the fault (whether it was fixed or not during the testing process). In one example, a binary value may be associated with a bug based on whether it was resolved during the testing process or not (for example, 0 if it was resolved, 1 if it was not). In another example embodiment, the value associated with resolution may be based on the extent to which the fault was resolved or not. For example a bug that was completely resolved may be assigned a resolution value of 0, a bug that was mostly resolved may be assigned a value of 20, a bug that was only partially resolved may be assigned a value of 70, and a bug that was not able to be resolved may be assigned a value of 100.

The process can be repeated 322 until a pre-defined number N of test suites have been executed 314. In an example embodiment of the invention, the process may be repeated a number of times based on time elapsed during the testing process. In another embodiment, one outcome of a test suite may cause an additional set of test suites to be executed. For example, when executing a test suite regarding the audio output quality of a device, if the test suite score exceeds a pre-determined number, an additional set of test suites focussing further on the audio elements of the device may be executed.

Once all of the test suites have been executed their test suite scores are calculated and ranked and the highest scoring suites are selected 318 to be subject to further, more detailed exploratory testing 320. In the example embodiment of a test suite results table shown in Figure 2, the three tests with the highest score are those associated with 'Feature', Release Approval' and 'Mode of Operations'. In an example embodiment of the invention, these three features may be selected to undergo exploratory testing. The identified faults may be new.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of testing an electronic device, the method comprising:
executing a plurality of pre-defined test suites on the electronic device to test one or more aspects of the functionality of the electronic device; and
subsequently carrying out exploratory testing on the electronic device, the exploratory testing being based on the results of the execution of the pre-defined test suites.

2. A method according to claim 1, wherein the exploratory testing that is carried out on the electronic device is carried out based on at least one test suite that produced the most unresolved errors during the execution of the plurality of pre-defined test suites on the electronic device

3. A method according to claim 1 or claim 2, wherein the exploratory testing that is carried out on the electronic device is carried out based one or more of: on a number of faults detected when the test suites are executed on the electronic device; values assigned to the severity of the faults detected; and values assigned to the resolution of the faults.

4. A method according to any of claims 1 to 3, wherein the exploratory testing that is carried out on the electronic device is carried out based on a test suite score calculated for each of the pre-defined test suites as a result of execution of the pre-defined test suites on the electronic device.

5. A method according to claim 4, wherein the test suite scores are calculated based on the number of faults detected when the test suite is executed on the electronic device, the values assigned to the severity of the faults detected, and the values assigned to the resolution of the faults.
